# FASCICULE DE BREVET EUROPEEN

(11) **EP 1 596 192 B1**
(45) Date de publication et mention de la délivrance du brevet: **10.10.2012**
(21) Numéro de dépôt: 05291001.5
(22) Date de dépôt: 10.05.2005
(51) Int. Cl.: G01N 27/447

(54) **Procédé de séparation de proteines par électrophorese capillaire et compositions de tampon pour électrophorese capillaire**
Trennungsverfahren von Proteinen durch Kapillarelektroforese und Pufferzusammensetzung für Kapillarelektroforese
Methode for separating proteins by capillary electrophoresis and buffer composition for capillary electrophoresis

(30) Priorité: 10.05.2004 FR 0405039
(43) Date de publication de la demande: 16.11.2005
(73) Titulaire: SEBIA, 91090 Lisses (FR)
(72) Inventeur: Robert, Frédéric, 91540 Mennecy (FR); Simonin, Denis, 91000 Evry (FR)
(74) Mandataire: Vaillant, Jeanne

(56) Documents cités:
- EP-A- 0 546 916
- EP-A- 1 229 325
- WO-A-03/102225
- US-A- 4 654 132
- TADEY T ET AL: "CHARACTERIZATION OF PLASMA APOLIPOPROTEINS BY CAPILLARY ELECTROPHORESIS" JOURNAL OF CHROMATOGRAPHY, BIOMEDICAL APPLICATIONS, ELSEVIER SCIENCE PUBLISHERS B.V. AMSTERDAM, NL, vol. 583, no. 1, 1992, pages 111-115, XP008039480
- TADEY T ET AL: "EFFECT OF DETERGENTS ON THE ELECTROPHORETIC BEHAVIOUR OF PLASMA APOLIPOPROTEINS IN CAPILLARY ELECTROPHORESIS" JOURNAL OF CHROMATOGRAPHY A, ELSEVIER, AMSTERDAM, NL, vol. 652, no. 1, 1993, pages 131-138, XP008039557 ISSN: 0021-9673
- STOCKS J ET AL: "ANALYSIS OF ALIPOPROPTEINS AND LIPOPROTEINS BY CAPILLARY ELECTROPHORESIS" ELECTROPHORESIS, WEINHEIM, DE, vol. 20, no. 10, 1999, pages 2118-2123, XP008039535 ISSN: 0173-0835
- BOSSUYT X ET AL: "AUTOMATED SERUM PROTEIN ELECTROPHORESIS BY CAPILLARYS (R)" CLINICAL CHEMISTRY AND LABORATORY MEDICINE, WALTER DE GRUYTER UND CO, DE, vol. 41, no. 5, 2003, pages 704-710, XP008039539 ISSN: 1434-6621
- LEGAZ M E ET AL: "Effect of polyamines on the separation of ovalbumin glycoforms by capillary electrophoresis", JOURNAL OF CHROMATOGRAPHY, ELSEVIER SCIENCE PUBLISHERS B.V, NL, vol. 719, no. 1, 5 January 1996 (1996-01-05), pages 159-170, XP004038432, ISSN: 0021-9673, DOI: 10.1016/0021-9673(95)00337-1

## Description

La présente invention concerne un procédé pour la séparation de protéines et peptides par électrophorèse capillaire ainsi que des compositions de tampon comportant un additif utile pour cette séparation, en présence de lipoprotéines dans l'échantillon.

Il est connu d'analyser le taux des protéines dans des liquides biologiques comme du sérum, avec des visées analytiques et notamment diagnostiques, et usuellement de séparer des protéines par électrophorèse, tant en électrophorèse sur gel qu'en électrophorèse capillaire. L'un des intérêts de l'électrophorèse capillaire réside dans le fait que de très petites quantités des liquides biologiques à analyser sont nécessaires. De plus, la séparation par cette technique peut être très rapide, dans la mesure où de forts voltages peuvent être utilisés sans que l'échantillon ne s'échauffe trop lors de la séparation.

Pour la séparation des protéines sériques, on effectue classiquement l'électrophorèse capillaire avec des tampons alcalins. Usuellement, les profils protéiques obtenus comportent cinq ou six fractions qui correspondent aux constituants protéiques que sont la fraction albumine, les fractions α₁- et α₂-globuline, la fraction β-globuline, ou les fractions β₁- et β₂-globuline, et la fraction γ-globuline. Chacune de ces fractions comporte une ou plusieurs protéines sériques.

De telles séparations peuvent être faites, en électrophorèse capillaire, notamment, à l'aide de tampons d'analyse et techniques tels que décrits aux brevets US Re 36 011, EP 518 475, ou EP 1 229 325 et EP 1 258 724.

La séparation des protéines sériques est toutefois parfois insatisfaisante.

En effet, par « constituant protéique », on entend ici non seulement les constituants protéiques que sont les fractions α₁- ; α₂- ; β- ou β₁- et β₂- ; et γ-globuline, mais aussi les constituants lipoprotéiques que sont principalement les α-lipoprotéines, β-tipoprotéines et préβ-lipoprotéines encore appelées HDL, LDL et VLDL pour « High Density Lipoproteine », « Low Density Lipoproteine » et « Very Low Density Lipoproteine ». Or, les profils sont parfois imprécis notamment à cause de ces lipoprotéines, et principalement de la β-lipoprotéine et la préβ-lipoprotéine, qui apparaissent dans la zone des profils correspondant aux α₁- et α₂-globulines et β₁-globuline.

La demanderesse a maintenant mis en évidence qu'en utilisant un surfactant anionique, en tant qu'additif au tampon d'analyse, il était possible d'obtenir une séparation améliorée, et notamment un profil épuré dans la zone des α₁-, α₂- et β₁-globulines du profil électrophorétique. Ces additifs sont choisis parmi les surfactants anioniques capables d'interactions hydrophobes avec un ou plusieurs constituants lipoprotéiques, et notamment les résidus hydrophobes des lipoprotéines. Ils peuvent apporter à ce ou ces constituants lipoprotéiques une ou plusieurs charges négatives. Ils peuvent en modifier, et notamment en diminuer la mobilité électrophorétique par rapport à celle des autres constituants protéiques.

Aux faibles concentrations en additif utilisées selon l'invention, concentrations très faibles par rapport aux concentrations utilisées pour ces additifs dans d'autres applications, les profils obtenus en électrophorèse capillaire peuvent présenter des pics plus purs, exempts d'épaulement notamment en ce qui concerne les fractions α₁ et α₂, comme cela apparaît dans les exemples. Ceci a un grand intérêt pour l'exploitation des profils d'échantillons de sérum hyperlipémiques notamment, et présente un intérêt certain également lors de l'analyse d'échantillons normolipémiques.

Ainsi, l'invention concerne un procédé d'électrophorèse capillaire en solution libre à pH alcalin pour l'analyse d'échantillons comportant des constituants protéiques dont un (ou des) constituant(s) lipoprotéique(s) selon la revendication 1.

Cet additif est capable d'apporter à ce (ou ces) constituant(s) lipoprotéique(s) une ou plusieurs charges négatives et d'en modifier la mobilité électrophorétique, par rapport à celle des autres constituants protéiques, non lipidiques.

Cette étape est en général suivie de la séparation des constituants protéiques par migration et détection des constituants.

Est ainsi décrit un procédé de séparation par électrophorèse des constituants protéiques d'échantillons comportant au moins de l'albumine et les fractions α₁-, α₂- et β₁-globuline, ainsi que des lipoprotéines, dans un tampon d'analyse, dans lequel le tampon d'analyse comporte en outre au moins un additif surfactant anionique capable d'interaction hydrophobe avec les lipoprotéines.

Est également décrit un procédé de séparation électrophorétique, par électrophorèse capillaire à pH alcalin en solution libre, des constituants protéiques d'un échantillon liquide comportant des lipoprotéines, procédé dans lequel on fait passer l'échantillon comportant lesdits constituants dans un capillaire contenant un tampon d'analyse comportant en outre au moins un additif capable d'interagir spécifiquement avec les lipoprotéines ; l'additif peut être un surfactant anionique comportant une partie hydrophobe, comme une chaîne alkyle en C₁₀ à C₂₀, et une partie anionique apportant une charge négative forte à un pH supérieur à 9.

L'additif du type surfactant anionique est utilisé à des concentrations faibles dans le tampon, de façon que l'interaction reste faible sur l'albumine et les autres constituants protéiques non lipidiques et particulièrement centrée sur les lipoprotéines, ce que l'on appelle ici « spécifique aux lipoprotéines ». En effet, pour une telle interaction spécifique avec les lipoprotéines, il est préférable d'utiliser l'additif du type surfactant anionique à des concentrations faibles. Ces concentrations dépendent, pour chaque surfactant anionique, de son affinité pour les lipoprotéines, d'une part et de son affinité pour l'albumine et les autres constituants protéiques non lipidiques, d'autre part. La concentration optimale est ainsi différente pour chaque surfactant. Elle peut être de l'ordre de moins de 1 mM dans le tampon, par exemple de l'ordre de 0,001 à 0,2 mM, de préférence supérieure à 0,01 et inférieure à 0,1 mM, par exemple comprise entre 0,01 mM et 0,09mM, par exemple.

La Demanderesse a constaté, notamment pour le SDS, qu'une concentration d'environ 0,05 mM n'entraîne pas un déplacement suffisant des constituants lipoprotéiques et qu'une concentration supérieure à 0,2 mM déforme les profils (diminution des fractions β₂ et α₁ à 0,25 mM), et même conduit à 0,5 mM, à une déformation totale des profils.

Ainsi, les composés utiles comme additif pour tampon d'analyse en électrophorèse capillaire de l'invention capables d'interaction hydrophobe spécifique avec les lipoprotéines peuvent être des surfactants anioniques tels que ceux utilisés en MECC (Micellar Electrokinetic Capillary Chromatography), mais à une concentration nettement inférieure à leur concentration micellaire critique. Dans la présente invention, ces composés sont utilisés en EC en solution libre comme indiqué ci-dessus, il y a apport de charges négatives sur les lipoprotéines par interaction hydrophobe entre les résidus hydrophobes de ces lipoprotéines et la partie hydrophobe de ces composés, d'où une migration ralentie de ces lipoprotéines par rapport à celle des autres protéines. Une des conséquences est la séparation améliorée des fractions α₁, α₂ et β₁, les lipoprotéines migrant en dehors des zones où elles migrent usuellement, c'est-à-dire dans les zones α₁, α₂ et β₁. Ils sont également utilisés à une concentration inférieure aux concentrations décrites dans EP 1 229 325.

De plus, l'invention concerne l'utilisation d'une compositions pour l'électrophorèse capillaire selon la revendication 19 Dans un support acceptable, en présence d'au moins un tampon, on décrit qu' un additif du type surfactant anionique tel que défini ci-dessus, est capable de faire migrer les lipoprotéines en dehors des zones où elles migrent usuellement, notamment en dehors des zones des fractions α₁, α₂ et β₁.

Comme cela apparaît dans les exemples, l'utilisation d'additifs selon l'invention permet une séparation très améliorée des fractions protéiques α₁, α₂ et β₁, par déplacement des lipoprotéines en dehors de la zone propre à ces fractions. Elle permet de ce fait d'améliorer la justesse et la précision de l'analyse quantitative des protéines sériques, par rapport aux analyses réalisées avec les tampons usuels. Les additifs sont particulièrement utile pour l'analyse d'échantillons biologiques riches en β-lipoprotéine et préβ-lipoprotéine.

Enfin, l'invention a pour objet l'utilisation d'une trousses (ou kits) d'analyse des constituants protéiques dans un échantillon biologique, selon la revendication 24., Dans ce kit, le tampon et le ou les additif(s) et diluant(s) peuvent être stocké(s) séparément pour être mélangés extemporanément, ou stockés en mélange. Ce kit comprend éventuellement des indications d'utilisation pour réaliser l'analyse.

D'autres caractéristiques et avantages de l'invention apparaîtront à la lecture de la description détaillée qui va suivre, des exemples et figures annexées.
La figure 1 représente un électrophorégramme d'un sérum humain analysé par électrophorèse capillaire en utilisant un tampon selon le document EP 1 229 325.
La figure 2 représente un électrophorégramme du même sérum analysé par électrophorèse capillaire en utilisant le même tampon, comportant toutefois en outre un additif surfactant anionique selon l'invention.

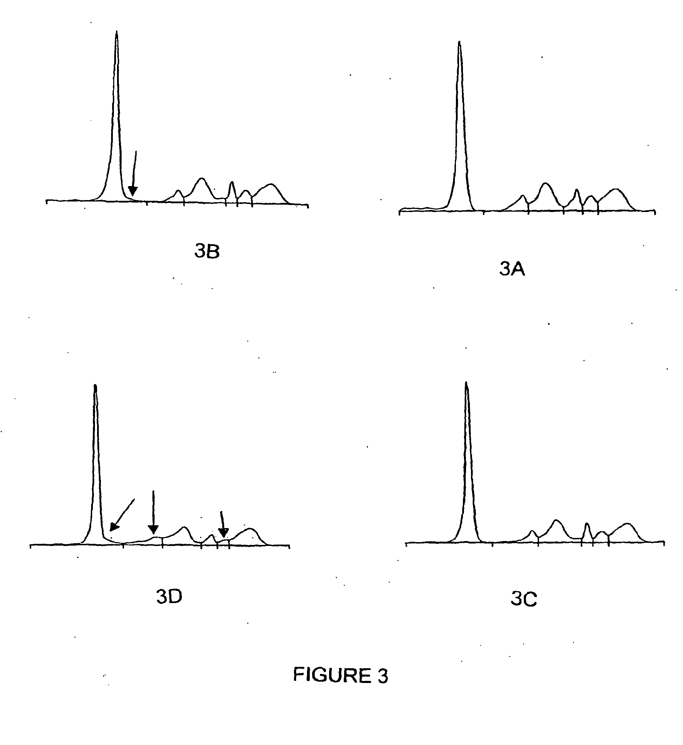

Les figures 3A, 3B, 3C et 3D représentent les électrophorégrammes d'un même sérum normolipémique, réalisés par EC en utilisant un même tampon additionné de 0 ; 0,05 ; 0,07 et 0,25 mM de SDS respectivement.

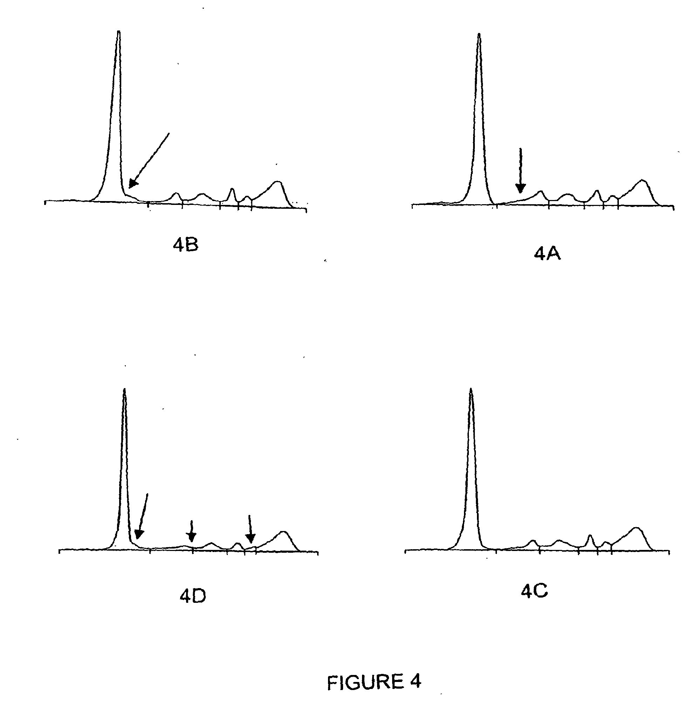

Les figures 4A, 4B, 4C et 4D représentent les électrophorégrammes d'un même sérum hyperlipémique, réalisés en EC en utilisant un même tampon additionné de 0 ; 0,05 ; 0,07 et 0,25 mM de SDS respectivement.

Les conditions de réalisation d'une électrophorèse capillaire EC sont connues de l'homme de l'art. Elles peuvent comporter usuellement un lavage des capillaires par une solution de lavage, un lavage au tampon d'analyse, une ou des dilution(s) éventuelle(s) de l'échantillon, l'injection de l'échantillon, la migration et la détection. Ces étapes peuvent être réalisées par des automates.

Des conditions de réalisation d'une éléctrophorèse capillaire sont par exemple les conditions appropriées pour utiliser l'automate Capillarys (SEBIA).

A titre d'additif pour tampon utile selon l'invention et capable d'interaction avec la partie hydrophobe des lipoprotéines, on peut citer les composés comportant un pôle anionique apportant une charge négative forte à pH alcalin et une partie hydrophobe.

La chaîne alkyle hydrophobe peut être composée d'au moins une chaîne alkyle en C₁₀ à C₂₄, ramifiée ou non, comportant au moins une partie linéaire d'environ 10 atomes de carbone, notamment 10 à 20 atomes de carbone. Comme cela sera facilement compris du spécialiste, cette partie hydrophobe pourra comporter des résidus ou fonctions qui ne modifient pas essentiellement son caractère hydrophobe.

Le pôle anionique peut être constitué par un ou plusieurs des groupes ou fonctions chimiques de la liste suivante : sulfonates, carboxylates, sulfates, et phosphates.

On peut ainsi citer notamment les surfactants anioniques comme les C₁₀-C₂₄-alkyl-mono-, di- ou tri-sulfates, les C₁₀-C₂₄-alkyl-mono-, di- ou tri-sulfonates, les C₁₀-C₂₄-alkyl-mono-, di- ou tri- carboxylates, C₁₀-C₂₄-alkyl-mono, -di ou tri-phosphates et les C₁₀-C₂₄ alkylcarboxy-sulfonates, -sulfates et -phosphates, et en particulier les C₁₀ à C₂₄-alkylsulfates.

Les di- et tri-carboxylates, di- et tri-sulfonates, di- ou tri-sulfates et di- ou tri-phosphates, et carboxy-sulfonates, -sulfates et -phosphates ci-dessus sont ainsi des combinaisons de une ou plusieurs fonctions carboxylates, sulfates, sulfonates ou phosphates sur des chaînes alkyles de 10 à 24 atomes de carbone.

Parmi les tensioactifs anioniques cités ci-dessus, on préfère les C₁₀-C₂₄ monoalkylsulfates, particulièrement les C₁₀ à C₂₀ alkylsulfates et parmi ceux-ci les C₁₀ à C₁₆ alkylsulfates.

Ces composés sont connus en soi et disponibles dans le commerce. Ils peuvent être sous forme acide ou sous forme de sels notamment sels de métaux alcalins.

On préfère particulièrement le dodécylsulfate et plus précisément le dodécylsulfate de sodium (SDS).

Dans les dénominations ci-dessus, les radicaux alkyle sont de préférence linéaires.

Les additifs du type surfactants anioniques définis ci- dessus peuvent en outre être utilisés en mélange.

En outre, les additifs du type surfactant anionique peuvent avantageusement être utilisés en présence d'autres additifs connus pour interagir avec l'albumine, en améliorant la distance entre l'α₁-globuline et l'albumine tels que décrits dans le document EP 1 229 325.

Parmi les additifs cités dans le document EP 1 229 325 ci-dessus pour leur interaction avec l'albumine, on préfère les C₆ à C₁₀ alkylsulfonates et parmi les C₆ à C₁₀ alkylsulfonates, on préfère particulièrement l'octanesulfonate qui améliore notablement la lisibilité des profils eu égard à la séparation entre l'α₁-globuline et l'albumine.

Par échantillon selon l'invention, on entend l'échantillon biologique à analyser, préalablement dilué avec une solution de dilution appropriée ou du tampon d'analyse, par exemple, ou pur.

Comme échantillon, on peut analyser tout liquide biologique de patients sains ou malades. Ainsi, les liquides biologiques humains peuvent être du sérum normal ou pas, et aussi du sang hémolysé, du plasma, de l'urine ou du fluide cérébro-spinal. Outre les échantillons biologiques humains, on peut analyser des échantillons d'origine animale. Les échantillons peuvent aussi être des protéines synthétiques, et le procédé de l'invention peut alors avoir des visées de contrôle de production par exemple.

Les additifs selon l'invention sont particulièrement utiles pour les analyses de sérum, et la séparation de protéines sériques, dans des échantillons humains.

Dans les échantillons de sérum, les protéines sériques à séparer sont l'albumine et les fractions α₁- ; α₂- ; β (ou β₁- et β₂-) ; et γ-globuline, et les α-lipoprotéines, β-lipoprotéines et préβ-lipoprotéines, particulièrement, les β-lipoprotéines et préβ-lipoproteines. Ces dénominations peuvent inclure les constituants protéiques de tous les sous-types de ces classes.

A titre de tampon d'analyse, on peut utiliser tout tampon d'analyse connu, adapté à la séparation souhaitée, et utile en électrophorèse en général, et en électrophorèse capillaire en particulier. A titre d'exemples, on peut citer les tampons borate, phosphate et carbonate, les tampons à base d'acide aminé et les tampons dits biologiques. On peut citer notamment le tampon Capillarys B1B2+ (SEBIA).

Comme tampon biologique, on peut citer les tampons connus sous les noms de Bis-TRIS (2-bis[2-hydroxyéthyl]amino-2-hydroxyméthyl-1,3-propanediol), ADA (acide N-[2-acétamido]-2-iminodiacétique), ACES (acide 2-[2-acétamino]-2-aminoéthanesulfonique), PIPES (acide 1,4-pipérazinediéthanesulfonique), MOPSO (acide 3-[N-morpholino]-2-hydroxypropanesulfonique), Bis-TRIS PROPANE (1,3-bis[tris(hydroxyméthyl)méthylaminopropane]), BES (acide N,N-bis[2-hydroxyéthyl]-2-aminoéthanesulfonique), MOPS (acide 3-[N-morpholino]propanesulfonique), TES (acide 2-[2-hydroxy-1,1-bis(hydroxyméthyl)éthylamino]éthanesulfonique), HEPES (acide N-[2-hydroxyéthyl]piperazine-N'-(2-éthanesulfonique)), DIPSO (acide 3-N,N-bis[2 hydroxyéthyl]amino-2-hydroxypropanesulfonique), MOBS (acide 4-N-morpholinobutanesulfonique), TAPSO (acide 3[N-tris-hydroxyméthyl-méthylamino]-2-hydroxypropane sulfonique), TRIS (2-amino-2-[hydroxyméthyl]-1,3-propanediol), HEPPSO (acide N-[2-hydroxyéthyl]piperazine-N'-[2-hydroxypropanesulfonique]), POPSO (acide piperazine-N,N'-bis[2-hydroxypropanesulfonique], TEA (triéthanolamine), EPPS (acide N-[2-hydroxyéthyl]-piperazine-N'-[3-propane-sulfonique]), TRICINE (N-tris[hydroxyméthyl]méthylglycine), GLY-GLY (diglycine), BICINE (N,N-bis[2-hydroxyéthyl]-glycine), HEPBS (acide N-[2-hydroxyéthyl]piperazine-N'-[4-butanesulfonique]), TAPS (acide N-tris[hydroxyméthyl]méthyl-3-aminopropanesulfonique), AMPD (2-amino-2-méthyl-1,3-propanediol), TABS (acide N-tris[hydroxyméthyl]méthyl-4-amino butane sulfonique), AMPSO (acide 3-[(1,1-diméthyl-2-hydroxyéthyl)amino]-2-hydroxypropanesulfonique), CHES (acide 2-(N-cyclohexylamino)éthanesulfonique), CAPSO (acide 3-[cyclohexylamino]-2-hydroxy-1-propanesulfonique), AMP (2-amino-2-méthyl-1-propanol), CAPS (acide 3-cyclohexylamino-1-propane-sulfonique) ou CABS (acide 4-[cyclohexylamino]-1-butanesulfonique), de préférence AMPD, TABS, AMPSO, CHES, CAPSO, AMP, CAPS ou CABS.

En électrophorèse capillaire à pH alcalin, le pH du tampon d'analyse est compris entre 8 et 12, de préférence entre 9 et 11, et de façon plus particulièrement préférée a une valeur d'environ 10.

Les tampons d'analyse selon l'invention peuvent en outre comporter au moins un composé modifiant le pH. A titre de modificateur de pH, on peut utiliser un composé choisi parmi l'hydroxyde de lithium, l'hydroxyde de sodium, l'hydroxyde de potassium, l'hydroxyde de rubidium, l'hydroxyde de césium, l'hydroxyde de francium, un hydroxyde de mono-, di-, tri- ou tétra-alkyl ammonium ayant de 1 à 8 atomes de carbone dans la partie alkyle.

Selon l'invention, les tampons d'analyse sont utilisés dans les conditions et concentrations usuelles, à savoir de l'ordre de 10 à 500 mM, de préférence 20 à 400 mM.

Les additifs selon l'invention sont utilisés dans des concentrations définies ci-dessus, faibles par rapport aux concentrations décrites au document EP 1 229 325 dans le cadre de leur interaction avec l'albumine. De façon générale, elle est de l'ordre de 0,001 à 0,2 mM, de préférence 0,01 à 0,09 mM, et dans le cas du SDS, elle est inférieure à celle qui provoquerait une trop forte interaction avec l'albumine et les autres constituants protéiques non lipidiques, c'est-à-dire qui perturberait de façon trop importante le profil.

Les additifs dédiés plus spécifiquement de façon connue à l'interaction avec l'albumine sont utilisés dans des concentrations allant de 0,1 mM à 500 mM, sans toutefois excéder leur concentration micellaire critique dans le tampon d'analyse. Cette valeur de concentration micellaire critique intervient pour les additifs qui sont des surfactants.

Lorsque l'ocltanesulfonate est utilisé, sa concentration dans le tampon est de l'ordre de 1 à 10 mM, et de préférence 2,5 à 5 mM.

Son utilisation en présence de SDS peut permettre de contrecarrer l'effet du SDS sur le déplacement des pics notamment dans la zone albumine.

De plus, le tampon peut comporter un ou des additifs propre(s) à augmenter la force ionique.

A titre de tels additif pour tampon capable d'augmenter la force ionique de l'électrolyte, on peut citer les composés choisis parmi les chlorures, sulfates, sulfonates, carbonates, carboxylates, fluorures ou phosphates de métaux alcalins et leurs mélanges. Parmi eux, on préfère les chlorures, sulfates ou sulfonates, de métaux alcalins et leurs mélanges.

De façon encore plus préférée, on utilise le sulfate. De préférence, on choisit les sels de sodium, lithium et potassium. Parmi les additifs cités dessus, on préfère le sulfate de sodium et/ou lithium.

Les compositions de tampon de l'invention sont préparées de façon usuelle pour des compositions de tampon d'analyse, à savoir par adjonction des constituants sous forme liquide, ou solide à diluer, à un support acceptable. De façon usuelle, le support est de l'eau, distillée ou déminéralisée.

Du point de vue des matériaux utilisés pour les capillaires, ceux-ci sont usuels en électrophorèse capillaire. Ainsi, on peut utiliser des capillaires de silice fondue. Leur diamètre interne peut aller de 5 à 2 000 µm. De façon préférée, on utilise selon l'invention des capillaires de diamètre interne inférieur à 200 µm, de préférence inférieur à 100 µm. On utilise de préférence des capillaires à surface intérieure non traitée. Le spécialiste saura adapter la nature du capillaire et sa taille aux besoins de l'analyse.

### Exemples

### MATERIEL ET METHODES

### A) Electrophorèse capillaire

L'électrophorèse capillaire d'échantillons cliniques est réalisée sur un appareil d'EC équipé d'un capillaire en silice fondue de diamètre interne 25 microns. La détection est réalisée à 200 nm. Les échantillons sont placés dans le passeur d'échantillons de l'appareil Capillarys (SEBIA) et les échantillons sont injectés automatiquement par injection hydrodynamique. La séparation des échantillons est réalisée en moins de 5 minutes en appliquant un champ électrique d'environ 400 V/cm. Le capillaire est lavé avant chaque analyse par de la soude 0,25 M, puis par le tampon d'analyse.

### Tampons d'analyse :

Les produits chimiques utilisés sont de grade analytique.

Le tampon borate 150 mM est préparé en dissolvant 9,3 g d'acide borique (masse molaire : 61,83 g/mol) dans 1 l d'eau déminéralisée, et 5,1 g de soude (masse molaire : 40,0 g/mol). La concentration finale est de 150 mM et le pH de 10,0.

### B) Echantillons cliniques :

Pour l'EC, le sérum humain est dilué au 1/5^{ème} dans le tampon d'analyse.

### Exemple 1 (comparatif)

Un tampon d'analyse borate est préparé comme ci-dessus.

L'électrophorèse a été réalisée selon la méthode ci-dessus sur un sérum humain hyperlipémique (Triglycérides : 5,73 g/l).

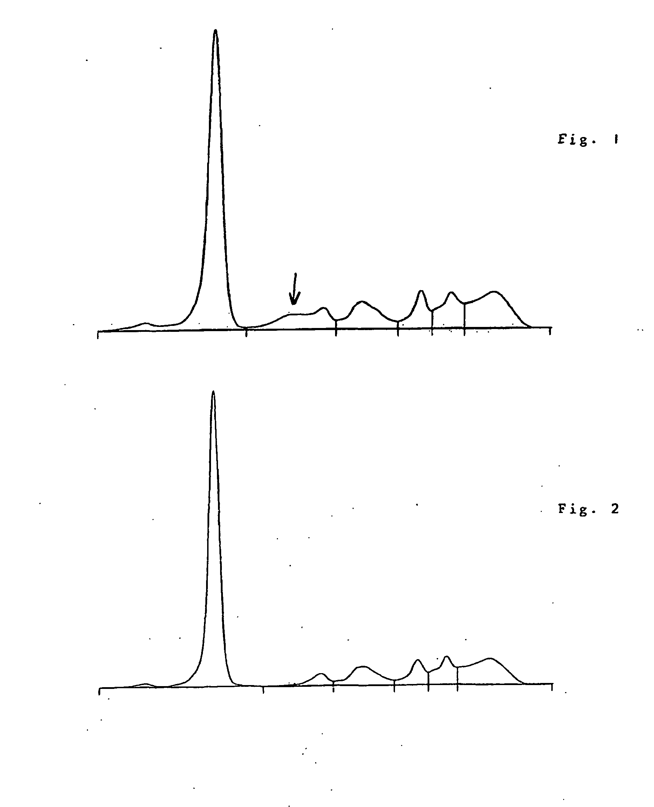

Comme cela apparaît sur la figure 1, l'électrophorégramme obtenu présente, de gauche à droite, six pics successifs attribués respectivement aux fractions albumine et α₁, α₂, β₁, β₂, et γ-globuline.

| Fraction | % |
|---|---|
| Albumine | 52,3 |
| Alpha 1 | 9,7 |
| Alpha 2 | 9,6 |
| Beta 1 | 6,4 |
| Beta 2 | 7,8 |
| Gamma | 14,2 |

### Exemple 2

Au tampon d'analyse de l'exemple 1, on ajoute du SDS à une concentration de 0,07 mM.

L'électrophorèse a été réalisée comme à l'exemple 1.

Comme cela apparaît sur la figure 2, l'électrophorégramme obtenu présente, de gauche à droite, six pics successifs attribués respectivement aux fractions albumine et α₁, α₂, β₁, β₂, et γ-globuline. Par comparaison avec le résultat de l'exemple 1, la séparation entre les deux fractions est nettement améliorée. En effet, le pic repéré par une flèche et épaulé sur le pic d'alpha-1 (correspondant aux préβ-lipoprotéines) est éliminé du profil.

| Fraction | % |
|---|---|
| Albumine | 57,7 |
| Alpha 1 | 3,9 |
| Alpha 2 | 9,1 |
| Beta 1 | 6,2 |
| Beta 2 | 7,6 |
| Gamma | 15,5 |

### Exemple 3

L'électrophorèse d'un sérum humain normolipémique (triglycérides : 1,10 g/l) a été réalisé comme aux exemples précédents en ajoutant au tampon du SDS à une concentration de 0,00 ; 0,05 ; 0,07 et 0,25 mM.

Les électrophorégrammes obtenus présentent de gauche à droite six pics successifs attribués respectivement aux fractions albumine et α₁, α₂, β₁, β₂ et γ globuline. Le tableau suivant reprend les résultats obtenus.

| FRACTION | % | | | |
|---|---|---|---|---|
| | Concentration SDS (mM) | | | |
| | 0,00 fig. 3A | 0,05 fig. 3B | 0,07 fig. 3C | 0,25 fig. 3D |
| Albumine | 50,4 | 50,5 | 49,1 | 52,4 |
| α₁ | 6,5 | 5,2 | 6,0 | 7,3 |
| α₂ | 16,2 | 17,9 | 18,3 | 16,5 |
| β₁ | 6,2 | 5,0 | 4,9 | 4,1 |
| β₂ | 5,4 | 4,9 | 4,8 | 2,3 |
| γ | 15,3 | 16,5 | 16,9 | 17,4 |
| | | Légère interférence lipidique sur pic albumine | Pas d'interférence | Déformation fraction α₁ ; léger Epaulement sur pic albumine ; diminution fraction β₂ |

### Exemple 4

On a procédé comme à l'exemple 3 avec un sérum humain hyperlipémique (triglycérides : 5,63 g/l). Les électrophorégrammes obtenus présentent de gauche à droite six pics successifs attribués respectivement aux fractions albumine et α₁, α₂, β₁, β₂ et γ globuline. Le tableau suivant reprend les résultats obtenus.

| FRACTION | % | | | |
|---|---|---|---|---|
| | Concentration SDS (mM) | | | |
| | 0,00 fig. 4A | 0,05 fig. 4B | 0,07 fig. 4C | 0,25 fig. 4D |
| Albumine | 54,7 | 59,1 | 57,2 | 58,7 |
| α₁ | 9,7 | 4,9 | 5,6 | 5,9 |
| α₂ | 7,9 | 8,3 | 8,6 | 7,2 |
| β₁ | 5,0 | 5,0 | 4,9 | 3,7 |
| β₂ | 3,4 | 3,2 | 3,4 | 1,8 |
| γ | 19,3 | 19,5 | 20,3 | 22,7 |
| | interférence lipidique ; épaulement sur α₁ | Epaulement sur pic albumine | Pas d'interférence | Interférence sur pic albumine ; déformation fraction α₁ ; diminution fraction β₂. |

## Revendications

1. Procédé d'électrophorèse capillaire en solution libre à pH alcalin pour l'analyse d'échantillons comportant des constituants protéiques dont un (ou des) constituant(s) lipoprotéique(s), les constituants protéiques étant l'albumine et les fractions α₁-, α₂-, β- ou (β₁- et β₂-), γ-globuline, et les constituant(s) lipoprotéique(s) étant l'a-lipoprotéine, la β-lipoprotéine et/ou la préβ-lipoprotéine **caractérisé en ce qu'**il comporte au moins une étape où :
on introduit l'échantillon dans un tube capillaire contenant un tampon d'analyse, ledit tampon d'analyse comportant en outre au moins un additif du type surfactant anionique capable d'interaction hydrophobe avec le (ou les) constituant(s) lipoprotéique(s) et d'en modifier la mobilité électrophorétique, par rapport à celle des autres constituants protéiques,
ledit additif comportant une partie hydrophobe composée d'au moins une chaîne alkyle en C₁₀ à C₂₄, ramifiée ou non, comportant une partie linéaire d'au moins 10 atomes de carbones, et un pôle anionique constitué par un ou plusieurs groupes choisi(s) parmi les sulfonates, carboxylates, sulfates ou phosphates, la concentration en additif dans le tampon étant supérieure à 0,001 mM et inférieure à 0,1 mM.

2. Procédé selon la revendication 1, **caractérisé en ce qu'**il comporte en outre la séparation des constituants par migration et la détection de ces constituants.

3. Procédé selon la revendication 1 ou 2, **caractérisé en ce que** l'échantillon est biologique.

4. Procédé selon l'une des revendications 1 à 3, **caractérisé en ce que** l'échantillon est un échantillon de sérum, du sang hémolysé, plasma, urine ou liquide céphalo-rachidien.

5. Procédé selon l'une des revendications 1 à 4, **caractérisé en ce que** les constituants sont sériques.

6. Procédé selon l'une des revendications 1 à 5, **caractérisé en ce que** ledit additif comporte un pôle anionique à un pH supérieur à 9 et une partie hydrophobe.

7. Procédé selon l'une des revendications 1 à 6, **caractérisé en ce que** ledit additif est choisi parmi les surfactants anioniques comme les C₁₀-C₂₄-alkyl-mono-, di- ou tri-sulfates, les C₁₀-C₂₄-alkyl-mono-, di- ou tri-sulfonates, les C₁₀-C₂₄-alkyl-mono-, di- ou tri- carboxylates, C₁₀-C₂₄-alkyl-mono, -di ou tri-phosphates et les C₁₀-C₂₄ alkylcarboxy-sulfonates, -sulfates et -phosphates, et en particulier les C₁₀ à C₂₄-alkylsulfates.

8. Procédé selon l'une des revendications 1 à 7, **caractérisé en ce que** l'additif est un C₁₀ à C₂₀-alkylsulfate.

9. Procédé selon l'une des revendications 1 à 8, **caractérisé en ce que** l'additif est le dodécylsulfate de sodium.

10. Procédé selon l'une des revendications 1 à 9, **caractérisé en ce que** la concentration en additif dans le tampon est comprise entre 0,01 mM et 0,09 mM.

11. Procédé selon l'une des revendication 1 à 10, **caractérisé en ce que** la concentration d'additif dans le tampon est de l'ordre de 0,07 mM.

12. Procédé selon l'une des revendications 1 à 11, **caractérisé en ce que** le tampon comporte en outre un additif du type octanesulfonate, à une concentration dans ledit tampon comprise entre 1 mM et 10 mM, de préférence 2,5 et 5mM.

13. Procédé selon l'une des revendications 1 à 12, **caractérisé en ce que** le pH dudit tampon d'analyse est compris entre 9 et 11.

14. Procédé selon l'une des revendications 1 à 13, **caractérisé en ce que** le capillaire est en silice fondue.

15. Procédé selon l'une des revendications 1 à 14, **caractérisé en ce que** le tampon d'analyse comprend en outre au moins un modificateur de pH.

16. Procédé selon la revendication 15, **caractérisé en ce que** le modificateur de pH est choisi parmi l'hydroxyde de lithium, l'hydroxyde de sodium, l'hydroxyde de potassium, l'hydroxyde de rubidium, l'hydroxyde de césium, l'hydroxyde de francium, un hydroxyde de mono-, di-, tri- ou tétra-alkyl ammonium ayant de 1 à 8 atomes de carbone dans la partie alkyle.

17. Procédé de séparation électrophorétique selon la revendication 1, par électrophorèse capillaire à pH alcalin en solution libre, des constituants protéiques d'un échantillon liquide, procédé dans lequel on fait passer l'échantillon comportant lesdits constituants dans un capillaire contenant un tampon d'analyse capable d'interagir avec les lipoprotéines comportant en outre au moins un additif, l'additif étant un composé comportant un pôle anionique chargé négativement à un pH supérieur à 9 et une partie hydrophobe comportant au moins une chaîne alkyle en C₁₀ à C₂₀, et la concentration en additif dans le tampon étant supérieure à 0,001 mM et inférieure à 0,1 mM.

18. Procédé selon l'une des revendications 1 à 17, **caractérisé en ce que** le tampon d'analyse comporte en outre du sulfate de sodium ou de lithium.

19. Utilisation d'une composition pour l'électrophorèse capillaire en solution libre à pH alcalin en vue de l'analyse d'échantillons comportant des constituants protéiques dont un (ou des) constituant(s) protéique(s) est(sont) l'albumine et les fractions α₁-, α₂-, β- ou (β₁- et β₂-), γ-globuline et des constituants lipoprotéiques α-lipoprotéine, β-lipoprotéine et/ou pré β-lipoprotéine, ladite composition comportant au moins un tampon et en outre au moins un additif capable d'interaction hydrophobe avec les lipoprotéines dans un support acceptable, l'additif comportant une partie hydrophobe composée d'au moins une chaîne alkyle en C₁₀ à C₂₄, ramifiée ou non, comportant au moins une chaîne linéaire de 10 atomes de carbones, et un pôle anionique constitué par un ou plusieurs groupes choisi(s) parmi les sulfonates, carboxylates, sulfates et phosphates, la concentration en additif dans le tampon étant supérieure à 0,001 mM et inférieure à 0,1 mM.

20. Utilisation selon la revendication 19, **caractérisée en ce que** ledit additif est choisi parmi les surfactants anioniques comme les C₁₀-C₂₄-alkyl-mono-, di- ou tri-sulfates, les C₁₀-C₂₄-alkyl-mono-, di- ou tri-sulfonates, les C₁₀-C₂₄-alkyl-mono-, di- ou tri- carboxylates, C₁₀-C₂₄-alkyl-mono, -di ou tri-phosphates et C₁₀-C₂₄ alkylcarboxy-sulfonates, -sulfates et -phosphates, et en particulier les C₁₀ à C₂₄-alkylsulfates.

21. Utilisation selon l'une des revendications 19 ou 20, **caractérisée en ce que** ledit additif est choisi parmi les surfactants anioniques C₁₀ à C₂₀-alkylsulfates et leurs mélanges.

22. Utilisation selon l'une des revendications 19 à 21, **caractérisé en ce que** l'additif est un C₁₀ à C₁₆-alkylsulfate.

23. Utilisation selon l'une des revendications 19 à 22, **caractérisée en ce que** l'additif est le dodécylsulfate de sodium.

24. Utilisation d'une trousse d'analyse de constituants protéiques dans un échantillon biologique, pour l'électrophorèse capillaire en solution libre à pH alcalin en vue de l'analyse d'échantillons comportant des constituants protéiques dont un (ou des) constituant(s) protéique(s) est(sont) l'albumine et les fractions α₁-, α₂-, β- ou (β₁- et β₂-), γ-globuline et des constituants lipoprotéiques α-lipoprotéine, β-lipoprotéine et/ou pré β-lipoprotéine, à l'aide d'une composition selon l'une des revendications 19 à 23, ladite trousse comprenant au moins un tampon d'analyse et un additif du type surfactant anionique, capable de faire migrer les lipoprotéines en dehors des zones où elles migrent usuellement, notamment en dehors des zones des fractions α₁, α₂ et β₁ et/ou comportant une partie hydrophobe, comme une chaîne alkyle en C₁₀ à C₂₀, et une partie anionique apportant une charge négative forte à un pH supérieur à 9, la concentration en additif dans le tampon étant supérieure à 0,001 mM et inférieure à 0,1 mM après mélange éventuel du tampon et de l'additif ; et
une (ou des) solution(s) de lavage des capillaires et/ou un (ou des) diluant(s) approprié(s) et/ou des barrettes de dilution.

## Claims

1. A free solution capillary electrophoresis method at alkaline pH for the analysis of samples comprising protein constituents including one or more lipoprotein constituent(s), the protein constituents being albumin and the α₁-, α₂-, β- or (β₁- and β₂-), γ-globulin fractions, and the lipoprotein constituent(s) being α-lipoprotein, β-lipoprotein and/or pre-β-lipoprotein, **characterized in that** it comprises at least one step in which:
the sample is introduced into a capillary tube containing an analysis buffer, said analysis buffer further comprising at least one anionic surfactant type additive that is capable of hydrophobic interaction with the lipoprotein constituent(s) and of modifying the electrophoretic mobility with respect to that of other protein constituents, said additive comprising a hydrophobic portion composed of at least one C₁₀ to C₂₄ alkyl chain, which may or may not be branched, comprising a linear portion containing at least 10 carbon atoms, and an anionic pole constituted by one or more groups selected from sulphonates, carboxylates, sulphates and phosphates, the concentration of additive in the buffer being more than 0.001 mM and less than 0.1 mM.

2. A method according to claim 1, **characterized in that** it further comprises separating the constituents by migration and detecting said constituents.

3. A method according to claim 1 or claim 2, **characterized in that** the sample is a biological sample.

4. A method according to one of claims 1 to 3, **characterized in that** the sample is a sample of serum, haemolyzed blood, plasma, urine or cerebrospinal fluid.

5. A method according to one of claims 1 to 4, **characterized in that** the constituents are serum constituents.

6. A method according to one of claims 1 to 5, **characterized in that** said additive comprises an anionic pole at a pH of more than 9 and a hydrophobic portion.

7. A method according to one of claims 1 to 6, **characterized in that** said additive is selected from anionic surfactants such as C₁₀-C₂₄ alkyl mono-, di- or tri-sulphates, C₁₀-C₂₄ alkyl mono-, di- or tri-sulphonates, C₁₀-C₂₄ alkyl mono-, di- or tri-carboxylates, C₁₀-C₂₄ alkyl mono-, di- or tri-phosphates and C₁₀-C₂₄ alkylcarboxy-sulphonates, -sulphates and - phosphates, in particular C₁₀ to C₂₄ alkylsulphates.

8. A method according to one of claims 1 to 7, **characterized in that** the additive is a C₁₀ to C₂₀ alkylsulphate.

9. A method according to one of claims 1 to 8, **characterized in that** the additive is sodium dodecylsulphate.

10. A method according to one of claims 1 to 9, **characterized in that** the concentration of additive in the buffer is in the range 0.01 mM to 0.09 mM.

11. A method according to one of claims 1 to 10, **characterized in that** the concentration of additive in the buffer is of the order of 0.07 mM.

12. A method according to one of claims 1 to 11, **characterized in that** the buffer further comprises an octanesulphonate type additive in a concentration in said buffer in the range 1 mM to 10 mM, preferably 2.5 to 5 mM.

13. A method according to one of claims 1 to 12, **characterized in that** the pH of said analysis buffer is in the range 9 to 11.

14. A method according to one of claims 1 to 13, **characterized in that** the capillary is formed from fused silica.

15. A method according to one of claims 1 to 14, **characterized in that** the analysis buffer further comprises at least one pH modifier.

16. A method according to claim 15, **characterized in that** the pH modifier is selected from lithium hydroxide, sodium hydroxide, potassium hydroxide, rubidium hydroxide, caesium hydroxide, francium hydroxide, and mono-, di- tri- or tetra-alkyl ammonium hydroxide containing 1 to 8 carbon atoms in the alkyl portion.

17. A method for electrophoretic separation according to claim 1, by free solution capillary electrophoresis at alkaline pH, of protein constituents of a liquid sample, in which method the sample comprising said constituents is passed through a capillary containing an analysis buffer that is capable of interacting with the lipoproteins, further comprising at least one additive, the additive being a compound comprising an anionic pole which is negatively charged at a pH of more than 9 and a hydrophobic portion comprising at least one C₁₀ to C₂₀ alkyl chain, the concentration of additive in the buffer being more than 0.001 and less than 0.1 mM.

18. A method according to one of claims 1 **characterized in that** the analysis buffer further comprises sodium sulphate or lithium sulphate.

19. Use of a composition for free solution capillary electrophoresis at alkaline pH for the analysis of samples comprising protein constituents including one or more protein constituent(s) which is (are) albumin and the α₁-, α₂-, β- or (β₁- and β₂-), γ-globulin fractions and lipoprotein constituents α-lipoprotein, β-lipoprotein and/or pre-β-lipoprotein, said composition comprising at least one buffer and also at least one additive capable of a hydrophobic interaction with lipoproteins in a suitable support, said additive comprising a hydrophobic portion composed of at least one C₁₀ to C₂₄ alkyl chain, which may or may not be branched, comprising a linear portion containing at least 10 carbon atoms, and an anionic pole constituted by one or more groups selected from sulphonates, carboxylates, sulphates and phosphates, the concentration of additive in the buffer being more than 0.001 mM and less than 0.1 mM.

20. Use according to claim 19, **characterized in that** said additive is selected from anionic surfactants such as C₁₀-C₂₄ alkyl mono-, di- or tri-sulphates, C₁₀-C₂₄ alkyl mono-, di- or tri-sulphonates, C₁₀-C₂₄ alkyl mono-, di- or tri-carboxylates, C₁₀-C₂₄ alkyl mono-, di- or tri-phosphates and C₁₀-C₂₄ alkylcarboxy -sulphonates, -sulphates and -phosphates, in particular C₁₀ to C₂₄ alkylsulphates.

21. Use according to claim 19 or 20, **characterized in that** said additive is selected from C₁₀ to C₂₀ alkylsulphate anionic surfactants and mixtures thereof.

22. Use according to one of claims 19 to 22, **characterized in that** the additive is a C₁₀ to C₁₆ alkylsulphate.

23. Use according to one of claims 19 to 22, **characterized in that** the additive is sodium dodecylsulphate.

24. Use of a kit for analyzing protein constituents in a biological sample free solution capillary electrophoresis at alkaline pH for the analysis of samples comprising protein constituents including one or more protein constituent(s) which is (are) albumin and the α₁-, α₂-, β- or (β₁ and β₂-), γ-globulin fractions and lipoprotein constituents α-lipoprotein, β-lipoprotein and/or pre-β-lipoprotein, with a composition according to one of claims 19 to 23, said kit composition comprising at least one analysis buffer and an anionic surfactant type additive capable of causing lipoproteins to migrate beyond the zones to which they usually migrate, in particular beyond zones for the α₁, α₂ and β₁ fractions and/or comprising a hydrophobic portion such as a C₁₀ to C₂₀ alkyl chain and an anionic portion supplying a strong negative charge at a pH of more than 9, the concentration of additive in the buffer being more than 0.001 mM and less than 0.1 mM after optionally mixing the buffer and the additive,
and a solution or solutions for rinsing capillaries and/or one or more suitable diluents and/or dilution segments.

## Patentansprüche

1. Verfahren zur Kapillarelektrophorese in freier Lösung mit alkalischem pH-Wert zur Analyse von Proben mit Proteinbestandteilen, darunter ein (oder mehrere) Lipoproteinbestandteil(e), wobei die Proteinbestandteile Albumin und α₁-, α₂-, β-oder (β₁- und β₂), γ-Globulinfraktionen sind, und wobei der (die) Lipoproteinbestandteil(e) α-Lipoprotein, β-Lipoprotein und/oder Prä-β-Lipoprotein ist (sind),
**dadurch gekennzeichnet, dass** es wenigstens einen Schritt umfasst, bei dem:
die Probe in eine einen Analysepuffer enthaltende Kapillare eingebracht wird, wobei der Analysepuffer ferner wenigstens ein Additiv vom Typ Aniontensid aufweist, das zu einer hydrophoben Wechselwirkung mit dem (oder den)
Lipoproteinbestandteil(en) fähig ist und dessen (deren) elektrophoretische Beweglichkeit in Bezug auf die der anderen Proteinbestandteile zu ändern vermag, wobei das Addidtiv einen hydrophoben Anteil, der aus wenigstens einer verzweigten oder
nicht verzweigten Alkylkette mit 10 bis 24 Kohlenstoffatomen mit einem linearen Teil mit wenigstens 10 Kohlenstoffatomen gebildet ist, und einen anionischen Pol aufweist, der aus einer oder mehreren aus Sulfonaten, Carboxylaten, Sulfaten oder
Phosphaten bestehenden Gruppen gebildet ist, wobei die Additivkonzentration im Puffer größer als 0,001 mM und kleiner als 0,1 mM ist.

2. Verfahren nach Anspruch 1,
**dadurch gekennzeichnet, dass** es ferner die Trennung der Bestandteile durch Migration und die Detektion dieser Bestandteile umfasst.

3. Verfahren nach Anspruch 1 oder 2,
**dadurch gekennzeichnet, dass** es sich um eine biologische Probe handelt.

4. Verfahren nach einem der Ansprüche 1 bis 3,
**dadurch gekennzeichnet, dass** es sich bei der Probe um eine Serum-Probe, hämolysiertes Blut, Plasma, Urin oder Gehirn-Rückenmark-Flüssigkeit handelt.

5. Verfahren nach einem der Ansprüche 1 bis 4,
**dadurch gekennzeichnet, dass** die Bestandteile serös sind.

6. Verfahren nach einem der Ansprüche 1 bis 5,
**dadurch gekennzeichnet, dass** das Additiv einen anionischen Pol mit einem pH-Wert über 9 und einem hydrophoben Anteil aufweist.

7. Verfahren nach einem der Ansprüche 1 bis 6,
**dadurch gekennzeichnet, dass** das Additiv aus Aniontensiden gewählt ist, wie Monoalkyl-, Dialkyl- oder Trialkylsulfate mit 10 bis 24 Kohlenstoffatomen, Monoalkyl-, Dialkyl- oder Trialkylsulfonate mit 10 bis 24 Kohlenstoffatomen, Monoalkyl-, Dialkyl- oder Trialkylcarboxylate mit 10 bis 24 Kohlenstoffatomen, Monoalkyl-, Dialkyl- oder Trialkylphosphate mit 10 bis 24 Kohlenstoffatomen und Alkylcarboxysulfonate, -sulfate und -phosphate mit 10 bis 24 Kohlenstoffatomen, und insbesondere Alkylsulfate mit 10 bis 24 Kohlenstoffatomen.

8. Verfahren nach einem der Ansprüche 1 bis 7,
**dadurch gekennzeichnet, dass** das Additiv ein Alkylsulfat mit 10 bis 20 Kohlstoffatomen ist.

9. Verfahren nach einem der Ansprüche 1 bis 8,
**dadurch gekennzeichnet, dass** das Additiv Natriumdodecylsulfat ist.

10. Verfahren nach einem der Ansprüche 1 bis 9,
**dadurch gekennzeichnet, dass** die Additivkonzentration im Puffer zwischen 0,01 mM und 0,09 mM liegt.

11. Verfahren nach einem der Ansprüche 1 bis 10,
**dadurch gekennzeichnet, dass** die Additivkonzentration im Puffer bei 0,07 mM liegt.

12. Verfahren nach einem der Ansprüche 1 bis 11,
**dadurch gekennzeichnet, dass** der Puffer ferner ein Additiv vom Typ Oktansulfonat enthält, mit einer Konzentration im Puffer zwischen 1 mM und 10 mM, vorzugsweise zwischen 2,5 und 5 mM.

13. Verfahren nach einem der Ansprüche 1 bis 12,
**dadurch gekennzeichnet, dass** der pH-Wert des Analysepuffers zwischen 9 und 11 liegt.

14. Verfahren nach einem der Ansprüche 1 bis 13,
**dadurch gekennzeichnet, dass** die Kapillare aus Quarzglas ist.

15. Verfahren nach einem der Ansprüche 1 bis 14,
**dadurch gekennzeichnet, dass** der Analysepuffer ferner wenigstens einen pH-Modifikator aufweist.

16. Verfahren nach Anspruch 15,
**dadurch gekennzeichnet, dass** der pH-Modifikator gewählt ist aus Lithiumhydroxid, Natriumhydroxid, Kaliumhydroxid, Rubidiumhydroxid, Cäsiumhydroxid, Franciumhydroxid, einem Monoalkyl-, Dialkyl-, Trialkyl- oder Tetraalkylammoniumhydroxid mit 1 bis 8 Kohlenstoffatomen im Alkylanteil.

17. Verfahren zur elektrophoretischen Trennung nach Anspruch 1 durch Kapillarelektrophorese mit alkalischem pH-Wert in freier Lösung von Proteinbestandteilen einer flüssigen Probe, bei dem die die Bestandteile umfassende Probe in eine Kapillare eingebracht wird, die einen Analysepuffer enthält, der mit den Lipoproteinen in Wechselwirkung zu treten vermag und ferner ein Additiv enthält, wobei das Additiv eine Verbindung mit einem negativ geladenen anionischen Pol mit einem pH-Wert über 9 und einem hydrophoben Anteil mit wenigstens einer Alkylkette mit 10 bis 20 Kohlenstoffatomen ist, und wobei die Additivkonzentration im Puffer größer als 0,001 mM und kleiner als 0,1 mM ist.

18. Verfahren nach einem der Ansprüche 1 bis 17,
**dadurch gekennzeichnet, dass** der Analysepuffer ferner Natrium- oder Lithiumsulfat enthält.

19. Verwendung einer Zusammensetzung für die Kapillarelektrophorese in freier Lösung mit alkalischem pH-Wert zur Analyse von Proben mit Proteinbestandteilen, von denen ein (oder mehrere) Proteinbestandteil(e) Albumin und α₁-, α₂-, β- oder (β₁- und β₂), γ-Globulinfraktionen ist (sind), und mit Lipoproteinbestandteilen aus α-Lipoprotein, β-Lipoprotein und/oder Prä-β-Lipoprotein, wobei die Zusammensetzung wenigstens einen Puffer und ferner wenigstens ein Additiv aufweist, das zu einer hydrophoben Wechselwirkung mit den Lipoproteinen in einem geeigneten Träger fähig ist, wobei das Additiv einen hydrophoben Anteil, der aus wenigstens einer verzweigten oder nicht verzweigten Alkylkette mit 10 bis 24 Kohlenstoffatomen mit wenigstens einer linearen Kette mit 10 Kohlenstoffatomen gebildet ist, und einen anionischen Pol aufweist, der aus einer oder mehreren aus Sulfonaten, Carboxylaten, Sulfaten und Phosphaten bestehenden Gruppen gebildet ist, wobei die Additivkonzentration im Puffer größer als 0,001 mM und kleiner als 0,1 mM ist.

20. Verwendung nach Anspruch 19,
**dadurch gekennzeichnet, dass** das Additiv aus Aniontensiden gewählt ist, wie Monoalkyl-, Dialkyl- oder Trialkylsulfate mit 10 bis 24 Kohlenstoffatomen, Monoalkyl-, Dialkyl- oder Trialkylsulfonate mit 10 bis 24 Kohlenstoffatomen, Monoalkyl-, Dialkyl- oder Trialkylcarboxylate mit 10 bis 24 Kohlenstoffatomen, Monoalkyl-, Dialkyl- oder Trialkylphosphate mit 10 bis 24 Kohlenstoffatomen und Alkylcarboxysulfonate, -sulfate und -phosphate mit 10 bis 24 Kohlenstoffatomen, und insbesondere Alkylsulfate mit 10 bis 24 Kohlenstoffatomen.

21. Verwendung nach einem der Ansprüche 19 oder 20,
**dadurch gekennzeichnet, dass** das Additiv aus den Aniontensiden der Alkylsulfate mit 10 bis 20 Kohlenstoffatomen und ihren Mischungen gewählt ist.

22. Verwendung nach einem der Ansprüche 19 oder 21,
**dadurch gekennzeichnet, dass** das Additiv ein Alkylsulfat mit 10 bis 16 Kohlenstoffatomen ist.

23. Verwendung nach einem der Ansprüche 19 oder 22,
**dadurch gekennzeichnet, dass** das Additiv Natriumdodecylsulfat ist.

24. Verwendung eines Kits zur Analyse von Proteinbestandteilen in einer biologischen Probe für die Kapillarelektrophorese in freier Lösung mit alkalischem pH-Wert zur Analyse von Proben mit Proteinbestandteilen, von denen ein (oder mehrere) Proteinbestandteil(e) Albumin und α₁-, α₂-, β- oder (β₁- und β₂), γ-Globulinfraktionen ist (sind), und mit Lipoproteinbestandteilen aus α-Lipoprotein, β-Lipoprotein und/oder Prä-β-Lipoprotein mit Hilfe einer Zusammensetzung nach einem der Ansprüche 19 bis 23, wobei das Kit wenigstens einen Analysepuffer und ein Additiv vom Typ Aniontensid beinhaltet, das die Lipoproteine aus Zonen abwandern lässt, in die diese normalerweise wandern, insbesondere aus Zonen der α₁-, α₂- und, β₁-Fraktionen, und/oder das einen hydrophoben Anteil wie eine Alkylkette mit 10 bis 20 Kohlenstoffatomen und einen eine starke negative Ladung zuführenden anionischen Anteil mit einem pH-Wert über 9 aufweist, wobei nach eventuell erfolgter Mischung des Puffers und des Additivs die Additivkonzentration im Puffer größer als 0,001 mM und kleiner als 0,1 mM ist; und
eine (oder mehrere) Lösung(en) zum Waschen der Kapillaren und/oder ein (oder mehrere) Verdünnungsmittel und/oder Verdünnungssegmente.
